(19) Europäisches Patentamt
European Patent Office
Office européen des brevets

(11) **EP 0 693 515 B1**

(12) **EUROPÄISCHE PATENTSCHRIFT**

(45) Veröffentlichungstag und Bekanntmachung des Hinweises auf die Patenterteilung:
**09.12.1998 Patentblatt 1998/50**

(51) Int Cl.[6]: **C08G 69/04**, C08G 69/28

(21) Anmeldenummer: **95110840.6**

(22) Anmeldetag: **11.07.1995**

(54) **Verfahren zur Herstellung von Vorkondensaten teilkristalliner oder amorpher, thermoplastischer teilaromatischer (Co)Polyamide**

Process for the preparation of precondensates of semi-crystalline or amorphous semi-aromatic thermoplastic (co)polyamides

Procédé de préparation de précondensats de (co)polyamides semiaromatiques thermoplastiques semicristallins ou amorphes

(84) Benannte Vertragsstaaten:
**CH DE FR GB LI NL**

(30) Priorität: **14.07.1994 DE 4424949**
**12.04.1995 DE 19513940**

(43) Veröffentlichungstag der Anmeldung:
**24.01.1996 Patentblatt 1996/04**

(73) Patentinhaber: **EMS-INVENTA AG**
**8001 Zürich (CH)**

(72) Erfinder:
• **Liedlhoff, Hanns, Dr. rer. nat.**
**CH-7013 Domat/Ems (CH)**
• **Schmid, Manfred, Dr. rer. nat.**
**CH-7013 Domat/Ems (CH)**

(74) Vertreter: **Müller-Boré & Partner Patentanwälte**
**Grafinger Strasse 2**
**81671 München (DE)**

(56) Entgegenhaltungen:
EP-A- 0 123 377        EP-A- 0 410 649

**Beschreibung**

Die Erfindung betrifft ein Verfahren zur Herstellung von Vorkondensaten teilkristalliner oder amorpher, thermoplastisch verarbeitbarer teilaromatischer Polyamide bzw. Copolyamide sowie die Verwendung der aus den Vorkondensaten zugänglichen höhermolekularen Polyamide zur Herstellung von Formmassen, welche mittels geeigneter Verarbeitungstechniken weiter verarbeitbar sind.

Teilaromatische Polyamide mit Terephthalamid- bzw. Isophthalamid-Einheiten sind in Form ihrer einfach aufgebauten Vertreter, z.B. als Poly(hexamethylenterephthalamid), schon seit Beginn des sogenannten "Nylon-Zeitalters" bekannt. Trotzdem hat es weiterer 3 bis 4 Jahrzehnte der Entwicklung bedurft, bis diese von ihren Eigenschaften her außerordentlich interessanten Polymere und ihre Gewinnung kommerziell verfügbar geworden sind. Erst seit den Siebzigerjahren haben sich diese Produkte mit einer stetig zunehmenden Wachstumsrate in immer mehr Varianten im Markt etablieren können.

Die Ursache für das, verglichen mit Nylon-6, -66, -11 und -12, späte Erscheinen der teilaromatischen Polyamide liegt darin, daß ihre Herstellung vergleichsweise hohe und zum Teil extreme Anforderungen an das Verfahren und die nötige Ausrüstung oder Anlagen stellt. Für die hochschmelzenden, teilkristallinen Poly(terephthalamide) stehen Verfahren und geeignete Ausrüstung sogar erst seit Mitte der Achtzigerjahre zur Verfügung.

Bei amorphen, teilaromatischen Polyamiden, die in praktisch unbegrenzter Vielfalt aus aromatischen und gegebenenfalls aliphatischen Dicarbonsäuren, aliphatischen, cycloaliphatischen oder araliphatischen Diaminen sowie Lactamen oder w-Aminosäuren zugänglich sind, stellt sich die Situation in bezug auf die Herstellungsverfahren und die Ausrüstung günstiger dar. Dort kann auf bewährte Chargenprozesse in konventionellen Rührautoklaven zurückgegriffen werden. Heute werden nahezu alle handelsüblichen amorphen Polyamide industriell chargenweise in entsprechend modifizierten oder ergänzten Anlagen hergestellt.

Zweckmäßigerweise wird dabei dem Polykondensationsreaktor ein sogenannter Löser vorgeschaltet, in dem etwa äquimolare Mengen Dicarbonsäure(n) und Diamin(e) zu wäßrigen, gegebenenfalls lactamhaltigen "Nylon"-Salz-Lösungen umgesetzt werden. Derartige Lösungen können durch die Anwendung einfacher Säure/Base-Titrationsmethoden auf ihre Zusammensetzung hin kontrolliert und gegebenenfalls durch Zugabe des fehlenden Säure- oder Aminanteils auf das vorgegebene Verhältnis der Amin- und Säurekomponenten eingestellt werden.

Chargenprozesse haben generell den Vorteil, daß Produktewechsel sehr rasch und ohne größeren Aufwand vorgenommen werden können. In diesem Sinne bieten Chargenprozesse im Gegensatz zu vollkontinuierlichen Verfahren ein hohes Maß an Flexibilität.

Allerdings ist die chargenweise Herstellung von amorphen teilaromatischen Polyamiden Beschränkungen in bezug auf die erreichbaren mittleren Molmassen unterworfen. Wegen der meist sehr hohen strukturbedingten Schmelzviskositäten solcher Polyamide muß ihre Polykondensation in einem sehr frühen Stadium abgebrochen werden, um die Schmelze aus dem Autoklaven vollständig austragen und beispielsweise zu Granulat aufarbeiten zu können. Zusätzlich werden zur Behebung der oft schwerwiegenden Austragungsprobleme monofunktionelle, den Polymeraufbau begrenzende Cokomponenten, wie Monocarbonsäuren oder Monoamine in der Polykondensation eingesetzt.

Die Begrenzung der mittleren Molmasse dieser Polymere auf vergleichsweise niedrige Werte wirkt sich dabei zwangsläufig negativ auf ihre mechanischen, verarbeitungstechnischen und anderen anwendungsrelevanten Eigenschaften aus.

Mittlerweile hat es zahlreiche Versuche gegeben, diese Schwierigkeiten zu umgehen. Neuere Vorschläge laufen auf die Anwendung zweistufiger Verfahren mit einer chargenweise oder kontinuierlich durchgeführten Vorkondensat- oder Prepolymer-Herstellung und einer Endreaktionsstufe zum fertigen Polymer hinaus. Letztere besteht bei amorphen teilaromatischen Polyamiden üblicherweise in der Nachkondensation der Vorkondensat-Schmelze mittels kontinuierlich arbeitender Doppel oder Einschneckenextruder bei relativ kurzen mittleren Verweilzeiten. In diesen Extrudern, die mit einer oder mehreren Entgasungsöffnungen versehen sind und gegebenenfalls unter vermindertem Druck betrieben werden können, wird die Kondensation der Vorkondensate zu hochmolekularen Polyamiden durchgeführt. Besonders aufschlußreich sind in diesem Zusammenhang die EP-A- 410 649 und die US-A-4 963 646. In beiden Dokumenten wird ein chargenweises Verfahren zur Vorkondensat-(Prepolymer)-Herstellung in Verbindung mit der oben beschriebenen kontinuierlich arbeitenden Endreaktionsstufe vorgeschlagen. Gemäß EP-A-410 649 werden carboxyl-terminierte Polyamid-Prepolymere mit etwa äquimolaren Mengen Diamin in einem Doppelschnecken-Extruder unter Abspaltung von Wasser zu hochmolekularem Polyamid kondensiert. Zu diesem Zweck wird dem Extruder kontinuierlich ein kontrollierter Mengenstrom an Prepolymer zugeführt, der nach Aufschmelzen und Komprimieren mit dem mittels Pumpe zudosierten Diamin vermischt und durch eine Reaktions- und eine anschließende, unter vermindertem Druck betriebene Entgasungszone gefördert wird. Nach Durchlaufen einer weiteren Kompressionszone tritt die hochmolekulare Polymerschmelze durch eine Düse aus, wird als Strang abgezogen, gekühlt und granuliert.

Die US-A-4 963 646 bedient sich einer ähnlichen Arbeitsweise wie die EP-A-410 649, mit dem einen Unterschied jedoch, daß hier ein carboxyl-terminiertes Polyamid-Prepolymer mit einem ansonsten gleich aufgebauten aminoterminierten Polyamid-Prepolymer zur Reaktion gebracht wird. Auch im Fall der US-A-4 963 646 erfolgt die Kondensation zu hochmolekularem Polyamid in einem Extruder mit Entgasungszone, wobei neben Doppelschneckenextrudern auch Einschneckenextruder für diese Verfahrensaufgabe verwendet werden können.

Beide Patentdokumente umgehen die genannten Probleme, die mit der einstufigen, chargenweisen Herstellung amorpher teilaromatischer Polyamide verbunden sind. Die jeweils beschriebenen Verfahren sind aber insofern schwierig, als dem Extruder zwei Komponenten in exakt einzuhaltenden, durch die Stöchiometrie bestimmten Mengenverhältnissen zugeführt werden müssen. Dieses Arbeitsweisen stellen somit höchste und technisch kaum erfüllbare Anforderungen an die Präzision von zwei genau aufeinander abgestimmten Förderaggregaten. Erschwerend kommt hinzu, daß der Extruder mit der homogenen Vermischung beider Komponenten und ihrer Polykondensation nacheinander zwei Aufgaben übernehmen muß. Die erforderliche zeitliche bzw. räumliche Trennung dieser Vorgänge längs der Extruderschnecke(n) ist angesichts der relativ kurzen verfügbaren Verweilzeit konventioneller Extruder von normalerweise etwa 1 bis 5 Minuten nicht einfach zu erreichen. Ähnlich gelagerte Probleme, wie bei den amorphen Polyamiden mit Terephthalamid- und/oder Isophthalamid-Einheiten treten bei den teilkristallinen Polyamiden auf Basis m-Xylylendiamin/Adipinsäure (PA-MXDA.6) bzw. p-Xylylendiamin/Adipinsäure (PA-PXDA.6) und den daraus abgeleiteten Copolyamiden mit beliebigen weiteren Dicarbonsäure- und/oder Diamin-Komponenten auf. Für die Herstellung des bedeutendsten Produktes aus dieser Reihe teilaromatischer Polyamide, PA-MXDA.6, ist ein herkömmliches Chargenverfahren nur beschränkt geeignet, besonders wenn es darum geht, hochviskoses Material mit ausreichend hoher Zähigkeit zu erzeugen. Infolge des hohen Schmelzpunktes von PA-MXDA.6 kann hier die Nachkondensation von tiefviskosem Material in fester Phase bei vergleichsweise hohen Prozeßtemperaturen angewendet werden. Bei tiefer schmelzenden Copolyamiden mit MXDA-Einheiten hat dieses Verfahren jedoch seine Grenzen.

Kontinuierliche Verfahren zur Herstellung von Vorkondensaten amorpher bzw. teilkristalliner, teilaromatischer Polyamide sind ebenfalls vorgeschlagen worden, um die Schwierigkeiten bei der Herstellung dieser Polymeren zu überwinden.

Ein solches Verfahren, das auch auf die Herstellung anderer Kondensationspolymere anwendbar sein soll, ist Gegenstand der US-A-4 831 108. Die dort beschriebene Folge von Verfahrensschritten beinhaltet für Polyamide die Herstellung von wäßrigen Salzlösungen, eine Vorreaktion dieser Lösungen in einem kontinuierlich durchströmten Rohrreaktor, der bei Temperaturen um 300 °C und zur Aufrechterhaltung einer geschlossenen flüssigen Phase bei Drücken oberhalb des jeweiligen Wasserdampfdruckes betrieben wird und - im nächsten Schritt - die kontrollierte Entspannung der vorreagierten Lösungen unter weiterer Kondensationen und Bildung stabiler Dispersionen von Polymerpartikeln in einer kontinuierlichen Dampfphase. Diese Dispersionen werden jeweils bevorzugt direkt einem Doppelschneckenextruder zugeführt und dort zu hochmolekularem Polyamid (bzw. anderen Kondensationspolymeren) polykondensiert.

Zum Verfahren der US-A-4 831 108 werden von der Anmelderin in der Beschreibung der US-A-5 098 940 ergänzende Angaben gemacht, wonach die Salzlösungen aus Diaminen und Dicarbonsäuren durch Abdampfen eines Teils des Wassers vorkonzentriert werden. Auch erfolgt die Vorreaktion der Salzlösungen zu Prepolymeren nicht mehr in einem, sondern in zwei hintereinandergeschalteten Rohrreaktoren. Was aber als grundsätzlich neu gegenüber dem Verfahren der US-A-4 831 108 betrachtet werden muß, ist die Feststellung der US-A-5 098 940, daß bei der Bildung der Dispersionen von Polymerpartikeln in einer entspannten kontinuierlichen Dampfphase ein Teil des Wassers im Gegenstrom über ein Regelventil abgelassen wird. Schließlich wird in der US-A-5 098 940 der Dispersion aus Polymerpartikeln und Wasserdampf im Extruder durch Entgasen entgegen der Förderrichtung weiteres Wasser entzogen, bevor stromabwärts die Polykondensation zu hochmolekularen Polyamiden erfolgt.

Das Verfahren der US-A-4 831 108 und der US-A-5 098 940 ist außerordentlich aufwendig und komplex, vor allem was die Regelung der sehr raschen und unmittelbar aufeinanderfolgenden Vorgänge im Rohrreaktor, in der "Dispersionsphase" und im Extruder betrifft. Durch die direkte Kopplung aller Prozeßstufen wird zudem die Beherrschung von Betriebsstörungen erschwert, wobei bereits Umstellungen auf andere Produkte als solche Störungen angesehen werden müssen. Im Hinblick auf Produktewechsel sind voll kontinuierliche Verfahren demnach weniger flexibel als Chargenprozesse.

Der Erfindung liegt daher die Aufgabe zugrunde, ein Verfahren zur Herstellung von Vorkondensaten teilkristalliner oder amorpher, thermoplastisch verarbeitbarer teilaromatischer Polyamide bzw. Copolyamide bereitzustellen, das einerseits weder die Nachteile der Chargenprozesse des Standes der Technik aufweist, noch den Beschränkungen kontinuierlicher Prozesse in bezug auf rasche Produktewechsel unterworfen ist, anderseits aber von den grundsätzlichen Vorteilen eines Chargen prozesses Gebrauch macht.

Diese Aufgabe wird durch das Verfahren gemäß Anspruch 1, die Vorkondensate gemäß Anspruch 6 und ihre Verwendung gemäß Anspruch 7 gelöst.

In den Unteransprüchen sind vorteilhafte Ausführungsformen der Erfindung enthalten.

Die Erfindung betrifft daher insbesondere einen mehrstufigen Chargenprozeß, der die folgenden Stufen a) bis e) beinhaltet.

a) eine Salzbildungsphase zur Herstellung von Salz(en) aus Diamin(en) und Dicarbonsäure(n) einer wäßrigen, 5 bis 50 Gew.-%igen, die Komponenten enthaltenden Lösung, die in einem rühr- und inertisierbaren Autoklaven untergegebenenfalls partieller Vorreaktion zu niedermolekularen Oligoamiden bei Temperaturen zwischen 120 °C und 220 °C und Drücken von bis zu 23 x $10^5$ Pa (23 bar) durchgeführt wird,

b) gegebenenfalls die Überführung der Lösung aus Stufe a) in ein zweites Reaktionsgefäß bzw. einen Rührautoklaven unter den am Ende ihrer Herstellung herrschenden Bedingungen,

c) die Reaktionsphase, während der die Umsetzung zu den Vorkondensaten durch Aufheizen des Reaktorinhaltes auf eine vorgegebene Temperatur und kontrolliertem Einstellen des Wasserdampfpartialdruckes auf den vorgegebenen Wert, der durch kontrolliertes Ablassen von Wasserdampf oder gegebenenfalls kontrollierte Einspeisung von Wasserdampf aus einem mit dem Autoklaven verbundenen Wasserdampferzeuger aufrechterhalten wird, vorangetrieben wird,

d) eine für mindestens 10 Minuten aufrechtzuerhaltende stationäre Phase, bei der die Temperatur des Reaktorinhalts und der Wasserdampfpartialdruck - letzterer unter Anwendung der unter c) aufgeführten Maßnahmen - kontrolliert jeweils auf die Werte eingestellt werden, welche für die Überführung der Vorkondensate in die nachfolgende Prozess-Stufe vorgesehen sind,

mit der Maßgabe, daß im Falle von Vorkondensaten teilkristalliner Polyamide oder Copolyamide mit einem Schmelzpunkt von mehr als 280°C (Schmelzpunkt-Maximum, gemessen mittels Differential Scanning Colorimetry) die Temperatur des Reaktorinhalts während dieser Phase d) und der Phase c) 265°C nicht überschreiten darf und daß für die besagten teilkristallinen Polyamide oder Copolyamide während der Phasen d) und c) folgende Randbedingungen (I-VI) der Tabelle I in bezug auf die Abhängigkeit des mindestens anzuwendenden Wasserdampfpartialdruckes $P_{H_2O}$ (minimum) von der Temperatur des Reaktorinhalts und der Amidgruppenkonzentration des Polymeren (in mmol/g, berechnet für ein auskondensiertes Polymer mit einer mittleren Molmasse von wenigstens 5000 g/mol) einzuhalten sind:

Tabelle I

| | Amid-Kon.(AK) [mmol/g] | Temp.-Bereich [°C] | $P_{H_2O}$ (minimum) x $10^5$ [Pa] |
|---|---|---|---|
| I | 10 > AK > 8 | 235 - 250 | 16 |
| II | 10 > AK > 8 | 250 - 260 | 19 |
| III | 8 > AK > 6 | 235 - 250 | 22 |
| IV | 8 > AK > 6 | 250 - 260 | 26 |
| V | 6 > AK | 235 - 250 | 30 |
| VI | 6 > AK | 250 - 260 | 32 |

e) eine Austragsphase, während der die Vorkondensate unter Konstanthalten der am Ende der Phase d) herrschenden Temperatur und Aufrechterhaltung mindestens des zu diesem Zeitpunkt herrschenden Wasserdampfpartialdrucks durch Einspeisen von Wasserdampf aus besagtem Wasserdampferzeuger in den Autoklaven und alle damit verbundenen Austragsleitungen/-aggregate entweder im schmelzeflüssigen Zustand direkt oder nach Durchlaufen des festen Zustandes und gegebenenfalls weiterer Verfahrensstufen einer Endreaktionsvorrichtung zugeführt werden können,

wobei bei Vorkondensaten amorpher oder unter 280°C schmelzender teilkristalliner teilaromatischer Polyamide oder Copolyamide in den Prozeßstufen c) bis e) die Vorkondensat-Temperatur zwischen 230°C und 320°C variiert werden kann und ein Wasserdampfpartialdruck von 1,5x$10^5$ bis 20x$10^5$ Pa (1,5 bis 20 bar) anwendbar ist.

Das geschieht für die Vorkondensate amorpher bzw. unterhalb 280 °C schmelzender teilkristalliner Polyamide oder Copolyamide durch Einbringen in einen dritten, als Puffergefäß dienenden Autoklaven bei gleichbleibender Temperatur und gleichbleibendem Druck, und von dort mittels eines geeigneten Dosier- und Förderaggregats über eine Schmelzeleitung zur Endreaktionsvorrichtung.

Die unter einem Druck von mindestens 16 x $10^5$ Pa (16 bar) stehenden Vorkondensate teilkristalliner Polyamide oder Copolyamide mit einem Schmelzpunkt von 280 °C und darüber, werden durch Einsprühen in einen inertisierten Zyklon oder Sprühturm oder ein vergleichbares Aggregat in Form fester Partikel gewonnen, gegebenenfalls getrocknet und/oder zerkleinert, und nach Wiederaufschmelzen mit einem geeigneten Dosier- und Förderaggregat in die Endreaktionsvorrichtung eingespeist.

Die erfindungsgemäßen Verfahrensstufen a) bis e) können wahlweise in Gegenwart von 0,005 bis 1,5 Gew.-%,

bezogen auf die Gesamtmenge der Polyamid-bildenden Komponenten, einer organischen und/oder anorganischen Phosphor- und/oder Zinn- und/oder Bleiverbindung durchgeführt werden.

Das Verfahren ist anwendbar auf die Herstellung von Vorkondensaten teilkristalliner oder amorpher thermoplastisch verarbeitbarerteilaromatischer Polyamide oder Copolyamide, die aus den den folgenden Komponenten bestehen können:

A: 0 bis 100 Mol-% mindestens einer substituierten oder unsubstituierten aromatischen Dicarbonsäure mit 8 bis 18 Kohlenstoffatomen (bezogen auf die Gesamtmenge aller Dicarbonsäuren A + B),

B: 0 bis 100 Mol-% mindestens einer Dicarbonsäure mit 6 bis 36 Kohlenstoffatomen aus der Gruppe gerad- oder verzweigtkettiger aliphatischer und cycloaliphatischer Dicarbonsäuren (bezogen auf die Summe von A + B),

C: 0 bis 100 Mol-% mindestens eines gerad- oder verzweigtkettigen aliphatischen Diamins mit 4 bis 13 Kohlenstoffatomen (bezogen auf die Gesamtmenge aller Diamine C + D + E),

D: 0 bis 100 Mol-% mindestens eines cycloaliphatischen Diamins mit 6 bis 26 Kohlenstoffatomen (bezogen auf die Summe C + D + E),

E: 0 bis 100 Mol-% mindestens eines araliphatischen Diamins mit 8 bis 26 Kohlenstoffatomen (bezogen auf die Summe C + D + E),

wobei die Mol-Menge der Dicarbonsäuren (A und B) annähernd gleich der Mol-Menge der Diamine (C, D und E) ist.

Der Fachmann weiß, daß auf Grund der Flüchtigkeit einzelner Monomerer die Molmenge der Dicarbonsäuren (A+B) und die Molmenge der Diamine (C + D + E) leicht voneinander abweichen können.

Den Komponenten aus der Gruppe A bis E können weitere Komponenten F und/oder G zugesetzt werden:

F: bis 80 bis 80 Mol-%, bezogen auf die Gesamtmenge der Komponenten aus der Gruppe A, B, C, D, E, F, mindestens eines polyamid-bildenden Monomeren aus der Gruppe der Lactame, bzw. $\omega$-Aminosäuren mit 6 bis 12 Kohlenstoffatomen,

G: 0 bis 6 Mol-%, bezogen auf die Gesamtmenge der Komponenten aus der Gruppe A, B, C, D, E, F, G, mindestens einer Verbindung aus der Gruppe der aliphatischen, cycloaliphatischen oder aromatischen Monoamine und der aliphatischen, cycloaliphatischen oder aromatischen Monocarbonsäuren.

Voraussetzung ist jedoch, daß mindestens eine der Komponenten A oder E vorhanden sein muß.

Außerdem können wahlweise mindestens ein Katalysator und/oder verarbeitungs- oder anwendungsbedingte Additive vorhanden sein.

Die teilkristallinen oder amorphen thermoplastisch verarbeitbaren hochmolekularen teilaromatischen Polyamide, welche aus den erfindungsgemäß hergestellten Vorkondensaten produzierbar sind, können zur Herstellung von Formmassen für beliebige geeignete Verarbeitungstechniken verwendet werden.

Das erfindungsgemäße Verfahren bezieht sich auf amorphe und teilkristalline teilaromatische Polyamide bzw. Copolyamide. Auf Grund dieses Umstandes ist es angebracht, Unterscheidungskriterien anzugeben, die es erlauben, eine gegebene Polyamidzusammensetzung der Gruppe der amorphen oder teilkristallinen Produkte zuzuordnen und gegebenenfalls auch Vorhersagen über deren physikalische Eigenschaften, vor allem den Schmelzpunkt im Fall teilkristalliner Produkte und die Glasübergangstemperatur (Tg) von Produkten aus beiden Gruppen, zu treffen.

Bei den amorphen Polyamiden bietet diesbezüglich z.B. der Artikel "Structure Property Realtionship in Amorphous Polyamides" von J.G. Dolden, erschienen in Polymer 1976, Vol. 17, Seiten 875 bis 892, wertvolle Hilfestellung.

Die Vorhersage von Teilkristallinität teilaromatischer Copolyamide ist wenigstens für die Gruppe der sogenannten isomorphen Copolyamide sicher möglich. Beispiele derartiger Systeme sind PA-66/6T, PA-46/4T, PA-106/10T und PA-68/6PBDA auf Basis Hexamethylendiamin (HMD)/Adipinsäure (ADS)/Terephthalsäure (TPS) bzw. Tetramethylendiamin/ADS/TPS bzw. Decamethylendiamin/ADS/TPS und HMD/Suberinsäure/p-Benzoldiessigsäure (PBDA).

Näheres dazu ist in zahlreichen Publikationen zu finden, z.B. bei H. Plimmer et al. in der Brit. Pat. Appl. 604/49, Imperial Chemical Industries Ltd. (1949); R. Gabler, CH-A-280 367, Inventa AG (1949); M. Levin und S.C. Temin, J. Polym. Sci. 49, 241-249 (1961); T. Sakashita et al. in der US-A-4 607 073, Mitsui Petrochemical Industries Ltd. (1985); bei S. Yamamoto und T. Tataka, EP-A-0 449 466, Mitsui Petrochemical Industries sowie in Brit. Pat. Appl. 766 927, California Research Corporation (1954).

Informationen über nicht-isomorphe Copolyamide, die in bestimmten Bereichen ihrer Zusammensetzung amorphe Strukturen aufweisen können, finden sich in einigen der vorstehenden Publikationen und bei A.J. Yu und R.D. Evans, J. Am. Chem. Soc., 20 5261-5365 (1959) sowie F.B. Cramer und R.G. Beamann, J. Polym. Sci., 21, 237-250 (1956).

Sollte auf Grund der oben aufgeführten Publikationen und dort zitierter weiterer Arbeiten keine schlüssige. Antwort möglich sein, ob eine gegebenes Polyamid teilkristallin oder amorph ist, so hilft ein Vorversuch zur Herstellung des betreffenden Produkts in einem kleinen Laborautoklaven weiter.

Zu diesem Zweck werden die jeweiligen Komponenten zusammen mit Wasser vermischt und nach Spülen mit einem Inertgas im geschlossenen Autoklaven aufgeheizt. Nach Erreichen von 200 bis 230 °C Produkttemperatur wird Wasserdampf durch Öffnen des Abgasventils abgelassen und unter weiterem Aufheizen auf 250 bis 290 °C auf Umgebungsdruck entspannt. Dabei muß allerdings in Kauf genommen werden, daß im Verlauf dieser Prozedur höherschmelzende teilkristalline Polyamide oder Copolyamide bei bestimmten Betriebszuständen spontan kristallisieren und den Rührer blockieren können. Das betreffende Produkt wird dem Autoklaven entnommen und mittels Differential Scanning Calorimetry (DSC) auf seinen Tg und Schmelzpunkt untersucht. Die DSC-Messung wird an ein- und derselben Probe zweckmäßigerweise ein- bis zweimal wiederholt, um eine definierte thermische Vorgeschichte des jeweiligen Polyamids sicherzustellen.

Im einfachsten Fall kann anstelle eines Autoklaven auch ein drucklos betriebenes rühr- und inertisierbares Gefäß, z.B. ein Glaskolben, zur Durchführung des Vorversuchs verwendet werden. Die Temperatur am Ende der Reaktion sollte dabei ebenfalls zwischen 250 bis 290 °C liegen.

Das erfindungsgemäße Verfahren kann auf die Herstellung von Vorkondensaten beliebiger amorpher oder kristalliner teilaromatischer Polyamide bzw. Copolyamide angewendet werden. Dementsprechend kann die Wahl der Komponenten A bis G in einem sehr breiten Bereich variiert werden:

○ Die substituierten oder unsubstituierten aromatischen Dicarbonsäuren (A) mit 8 bis 18 Kohlenstoffatomen umfassen dabei die Gruppe bestehend aus Terephthalsäure, Isophthalsäure, deren Alkyl- und Aryl- substituierten Derivaten, Naphthalindicarbonsäuren (-2,6-,-1,7- etc.), Diphenyldicarbonsäuren (-4,4'-, 3,3'- etc.) u.a. Bevorzugt sind Terephthalsäure, Isophthalsäure, 5-t-Butylisophthalsäure und Naphthalin-2,6-dicarbonsäure).

○ Unter den gerad- oder verzweigtkettigen aliphatischen oder cycloaliphatischen Dicarbonsäuren (B) mit 6 bis 36 Kohlenstoffatomen sind Adipinsäure, Korksäure, Azeiainsäure, Sebazinsäure, Dodecandisäure, Brassylsäure, die Trimethyl-adipinsäuren, cis- und/oder trans-Cyclohexan-1,4-dicarbonsäure, cis- und/oder trans-Cyclohexan-1,3-dicarbonsäure und dimerisierte Fettsäuren (z.B. Pripol 1013, -1009, -1008 der Firma UNICHEMA) bevorzugt.

○ Die gerad- oder verzweigtkettigen aliphatischen Diamine (C) mit 4 bis 13 Kohlenstoffatomen umfassen die Gruppe bestehend aus Hexamethylendiamin (1,6-Diaminohexan), 1,8-Diaminooctan, 1,10-Diaminodecan, 1,12-Diaminododecan, 1,4-Diaminobutan, 2,2-Dimethyl-1,3-diaminopropan, 2,2,4- und/oder 2,4,4-Trimethyl- 1,6-diaminohexan, 2-Methyl-1,5-diaminopentan, 5-Methyl?,9-diaminononan u.a. Bevorzugt sind 1,6-Diaminohexan, 1,10-Diaminodecan, 1,12-Diaminodidecan und 2,2,4- bzw. 2,4,4 Trimethyl-1,6-diaminohexan.

○ Bevorzugte Vertreter der cycloaliphatischen Diamine (D) mit 6 bis 26 Kohlenstoffatomen sind cis- und/oder trans-1,4-Diaminocyclohexan, cis- und/oder trans-1,3-Diaminocyclohexan, cis-und/oder trans-1,4-Bis(aminomethyl)cyclohexan, cis- und/oder trans-1,3-Bis(aminomethyl)cyclohexan, 3(4),8(9)-Bis(aminomethyl)-tricyclo-[5.2.1.0$^{2.6}$]-decan, 2(3),5(6)-Bis(aminomethyl)norbornan, 1,8-Diamino-p-menthan, 3-Amino-3,5,5'-trimethylcyclohexylamin.

○ Als bevorzugte araliphatische (aliphatische/aromatische bzw. cycloaliphatische/aromatische) Diamine (E) mit 8 bis 26 Kohlenstoffatomen, in denen eine Aminogruppe direkt mit dem aromatischen Rest verbunden sein kann, werden 1,4-Bis(aminomethyl) benzol, 1,3-Bis(aminomethyl)benzol und 4-(Aminobenzyl)cyclohexylamin verwendet.

○ Die bevorzugten Lactame bzw. ω-Aminosäuren (F) mit 6 bis 12 Kohlenstoffatomen sind Caprolactam, Laurinlactam bzw. &Aminocapronsäure, ω-Aminolaurinsäure und Aminoundecansäure, 11- sowie 9-Aminononansäure.

○ Die bevorzugten aliphatischen, cycloaliphatischen oder aromatischen Monocarbonsäuren bzw. Monoamine (G) sind Essigsäure, Proprionsäure, Buttersäure, Capronsäure, Laurinsäure, Stearinsäure, 2-Ethylhexansäure, Cyclohexansäure, Benzoesäure, die isomeren Aminoalkane mit 1 bis 26 Kohlenstoffatomen, z.B. n-Butylamin, n-Pentylamin, n-Hexylamin, 2-Ethylhexylamin, n-Dodecylamin, n-Tetradecylamin, n-Hexadecylamin, n-Octadecylamin sowie cycloaliphatische und araliphatische Monoamine wie Cyclohexylamin, die Methyl- und Dimethylcyclohexylamine und Benzylamin.

In bezug auf die bevorzugte Ausführungsform des erfindungsgemäßen Verfahrens muß zwischen den Vorkondensaten:

○ teilkristalliner teilaromatischer Polyamide oder Copolyamide mit einem Schmelzpunkt 280 °C und höher, und

○ den Vorkondensaten amorpher bzw. unterhalb 280 °C schmelzender teilkristalliner Polyamide oder Copolyamide

unterschieden werden.

Das Verfahrensprinzip ist jedoch in beiden Fällen das gleiche und besteht in den für die Eigenschaften der Vorkondensate entscheidenden Phasen c) (Reaktionsphase), d) (stationäre Phase) und e) (Austragsphase) darin, daß die Temperatur der Vorkondensatschmelze und der Wasserdampfpartialdruck des damit in Kontakt stehenden Gasraumes im jeweitigen Reaktions- bzw. PufferAutoklaven vom Ende der Reaktionsphase c) an kontrolliert auf den betreffenden vorgegebenen Werten gehalten werden. Die Aufrechterhaltung des Wasserdampfpartialdrucks geschieht dabei durch Ablassen von Wasserdampf aus dem jeweiligen Autoklaven oder kontrolliertes Zuspeisen von Wasserdampf in den (die) Autoklaven aus einem damit verbundenen Wasserdampferzeuger. Die Geschwindigkeit mit der das Ablassen des Wasserdampfes vorangetrieben werden kann, hängt sehr stark von der Größe und der Ausrüstung des Autoklaven ab. Bei Autoklaven mit innenliegenden Heizschlangen kann sicher schneller aufgeheizt und entgast werden, als bei solchen mit Doppelmantelbeheizung. Größere Autoklaven haben bei sonst gleicher Ausrüstung eine längere Aufheizdauer als kleinere (wegen des ungünstigeren Oberflächen/Volumen-Verhältnisses).

Generell gilt, daß die Phase c) aus wirtschaftlichen Gründen so kurz wie möglich gehalten werden sollte. (Zu den in den Beispielen angegebenen Zeiten für Phase c) ist zu sagen, da sie mit den angegebenen 60 - 180 Minuten sehr kurz sind und der Autoklavengröße (2,4 bzw. 20 ltr. Leervolumen) entsprechen. Bei einem 1500 ltr-Autoklaven würde, um realistisch zu sein, mit 5-8 Stunden für Phase c) zu rechnen sein).

Die stationäre Phase d) ist für die Dauer von mindestens 10 Minuten, vorzugsweise wenigstens 15 Minuten, aufrechtzuerhalten, damit die Vorkondensate in einen annähernd stabilen Zustand gelangen, in dem keine weitere wesentliche Änderung ihrer Eigenschaften, vor allem ihrer mittleren Molmasse und der direkt davon abhängigen Eigenschaften, auftritt.

Diese Bedingung ist durch Phase c) nicht erfüllt, da sich hier die Werte für T und p und damit die Produktbeschaffenheit ständig ändern.

Während der Austragsphase e) ist dafür zu sorgen, daß neben dem Autoklaven sämtliche damit verbundenen Austragsleitungen und Austragsaggregate kontrolliert auf der gleichen Temperatur und mindestens auf dem gleichen Wasserdampfpartialdruck wie im Autoklaven gehalten werden.

Der Wasserdampfpartialdruck ist vor der Beendigung der Reaktionsphase c) an den jeweils in den Gasräumen gemessenen Gesamtdruck anzugleichen. Die sehr aufwendige exakte Messung des Wasserdampfpartialdrucks erübrigt sich, weil die Partialdrücke der übrigen Gasbestandteile, wie Inertgas (z.B. Stickstoff), relativ flüchtige Rohstoffe (z.B. Hexamethylendiamin) oder eventuell sich bildende Zersetzungsprodukte der Rohstoffe (z.B. $NH_3$ aus Aminen oder $CO_2$ aus Carbonsäuren), gemessen am Gesamtdruck vernachlässigbar klein sind. Der Anteil des Inertgases - normalerweise Stickstoff - nimmt durch das nötige kontrollierte Öffnen des Entspannungventils am Reaktions-Autoklaven während der Reaktionsphase c) ohnehin stark ab und wird dabei praktisch vollständig durch aus der Salzbildungsstufe a) stammenden und bei der Reaktion gebildeten Wasserdampf verdrängt.

Die oben vorgenommene Unterscheidung zwischen- Vorkondensaten teilkristalliner teilaromatischer Polyamide oder Copolyamide mit einem Schmelzpunkt von 280 °C und höher einerseits, und den Vorkondensaten amorpher bzw. unterhalb 280 °C schmelzender teilkristalliner Polyamide oder Copolyamide anderseits, bezieht sich auf die Verfahrensparameter in den Stufen c) bis e) und die Verfahrensabläufe vom fertigen Vorkondensat zum korrespondierenden hochmolekularen Polyamid oder Copolyamid.

Die Herstellung der erstgenannten Gruppe von Vorkondensaten ist dabei insofern Restriktionen unterworfen, als die Vorkondensat-Temperatur während der Stufen c) bis e) 265 °C nicht überschreiten darf, und im Verlauf dieser Prozeßstufen bestimmte Randbedingungen in bezug auf den mindestens anzuwendenden Wasserdampfpartialdruck einzuhalten sind. Die oben und in Anspruch 1 angegebenen unteren Grenzen für den Wasserdampfpartialdruck hängen ihrerseits von der Temperatur bzw. dem gewählten Temperaturbereich und überraschenderweise auch von der Amidgruppenkonzentration AK (Berechnung s.u.) des betreffenden Polyamids oder Copolyamids ab. Ein genauer funktionaler Zusammenhang zwischen dem minimal notwendigen Wasserdampfpartialdruck, der Vorkondensat-Temperatur und der Amidgruppenkonzentration kann nicht angegeben werden. Es hat sich aber herausgestellt, wie in den Beispielen noch gezeigt wird, daß bei Einhaltung der genannten Randbedingungen eine sichere und störungsfreie Herstellung der Vorkondensate von teilkristallinen teilaromatischen und oberhalb 280 °C schmelzenden Polyamiden oder Copolyamiden möglich ist. Aus den mindestens notwendigen Wasserdampfdrücken, die den Temperaturbereichen jeweils zugeordnet sind, geht hervor, daß höhere Temperaturen auch höhere Drücke erfordern. Deshalb müssen bei Temperaturen oberhalb 260°C noch höhere Drücke als die in Tabelle 1 jeweils angegebenen angewendet werden.

Auf die Angaben von Mindestdrücken z.B. für 260 - 270°C wurde allerdings verzichtet, weil

- erstens keine gesicherten Daten vorliegen, (außer, daß bei 270°C in keinem der Fälle I, II und III in Tabelle I 30 x

$10^5$ Pa (30 bar) ausreichend sind) und

- zweitens höhere Drücke als 30 x $10^5$ Pa (30 bar) in Großautoklaven nur mit sehr hohem technischen Aufwand realisierbar sind.

Trotzdem ist für die hochschmelzenden Produkte (Smp. > 280°C) von 265°C als maximal zulässiger Temperatur für den Reaktorinhalt während der Phasen c) und d) die Rede. Diese zusätzliche Bedingung reflektiert nichts anderes als die realen Bedingungen in einem Autoklavenprozeß.

Zur Aufrechterhaltung des jeweils mindestens nötigen Wasserdampfpartialdrucks ist ein Wasserdampferzeuger am besten geeignet, aus dem in den Prozeßstufen c) bis e) kontrolliert Wasserdampf in den Autoklaven und die damit verbundenen Austragsleitungen und -aggregate eingespeist wird. Diese Maßnahme ist in der Austragsphase e) zwingend notwendig, weil der dabei durch Volumenvergrößerung zwangsläufig auftretende Druckabfall im Gasraum über der Vorkondensatschmelze kompensiert werden muß.

Während der Phasen c) und d) muß nur dann durch Zuschalten des Dampferzeugers eingegriffen werden, wenn durch Undichtigkeiten oder fehlerhaftes Entspannen des Wasserdampfs der Wasserdampfpartialdruck die einzuhaltende untere Grenze zu unterschreiten droht. Sobald in den Prozeßstufen Betriebszustände auftreten, wo entweder der Wasserdampfpartialdruck zu niedrig oder die Vorkondensat-Temperatur zu hoch ist oder sogar beides der Fall ist, besteht die Gefahr, daß sich das betreffende Vorkondensat innerhalb kurzer Zeit verfestigt und nicht mehr aus dem Reaktor über eine Schmelzleitung ausgetragen werden kann. Die Ursachen dieser unter allen Umständen zu vermeidenden Verfestigungsphänomene sind nicht bekannt. Auch der Stand der Technik gibt darüber an keiner Stelle Auskunft. Allerdings ist in diesem Zusammenhang ohnehin nur die Tatsache von Bedeutung, daß das genannte Problem erkannt wurde und mit dem erfindungsgemäßen Verfahren ein Mittel zu seiner Bewältigung bereitgestellt worden ist.

Anstelle eines Wasserdampferzeugers wäre auch eine direkte Wassereinspritzung mittels einer entsprechend gesteuerten Dosierpumpe in den Reaktor denkbar. Diese Arbeitsweise hätte allerdings den Nachteil, daß durch die im Reaktor ablaufende Verdampfung des Wassers Energie verbraucht wird und infolgedessen die Temperatur des Reaktorinhalts in kaum kontrollierbarer Weise abgesenkt wird.

Die Vorkondensate mit einem Schmelzpunkt von 280 °C und höher schmelzende Polyamide oder Copolyamide werden durch Versprühen in einen inertisierten, eventuell gekühlten Zyklon oder Sprühturm oder ein vergleichbares Aggregat ausgetragen, wobei ein Teil des in den Vorkondensatschmelzen gelösten Wassers schlagartig verdampft, und die Vorkondensate in feinteiliger kristallisierter Form anfallen.

Je nach Menge des bei diesem Vorgang verdampften Wassers werden die Vorkondensat-Partikel gleichzeitig mehr oder weniger stark abgekühlt.

Mittels eines geeigneten Fördersystems wird die feinteilige Vorkondensatmasse, gegebenenfalls nach weiterer mechanischer Zerkleinerung und/oder Trocknung, auf geeignete Weise wieder aufgeschmolzen und mit einem geeigneten Dosier- und Förderaggregat einer kontinuierlich arbeitenden mechanisch betriebenen Endreaktionsvorrichtung zugeführt.

Bei den Vorkondensaten amorpher oder unterhalb 280 °C schmelzender teilkristalliner teilaromatischer Polyamide oder Copolyamide besteht eine größere Freiheit bezüglich der Wahl der Temperatur und des Wasserdampfpartialdrucks in den Prozeßstufen c) bis e), als es bei der Vorkondensation von 280 °C und höher schmelzenden Produkten der Fall ist.

Die Vorkondensat-Temperatur kann in den Stufen c) bis e) zwischen 230 °C und 320 °C variiert werden, wobei es für die Untergruppe der zu teilkristallinen Polyamiden oder Copolyamiden (mit einem Schmelzpunkt von weniger als 280 °C) gehörige Vorkondensate zweckmäßig ist, die Vorkondensat-Temperatur höher als die jeweilige Schmelztemperatur einzustellen.

Der Wasserdampfpartialdruck kann in den Stufen c) bis e) ebenfalls in einem vergleichsweise breiten Bereich variiert werden. Drücke von 1,5 x $10^5$ bis 20 x $10^5$ Pa sind anwendbar. Vorzugsweise wird bei Wasserdampfpartialdrücken unter 15 x $10^5$ Pa (15 bar) gearbeitet. Besonders bevorzugt angewendet wird der Druckbereich von 2 x $10^5$ bis 10 x $10^5$ Pa (2 bis 10 bar), um den Wassergehalt der Vorkondensatschmelzen möglichst niedrig zu halten bzw. eine hohe Wirksamkeit der Endreaktionsvorrichtung sicherzustellen.

Die Vorkondensate amorpher oder teilkristalliner und unterhalb 280 °C schmelzender Polyamide oder Copolyamide werden dann als Schmelze aus dem Reaktor in einen unter den gleichen Bedingungen wie der Reaktor betriebenen, als Puffergefäß dienenden Autoklaven überführt und von dort mittels einer geeigneten Förder- und Dosiervorrichtung, z.B. mit einer Spinnpumpe, über eine Schmelzleitung direkt der Endreaktionsvorrichtung zugeführt.

Die Maßnahmen zur Aufrechterhaltung des Wasserdampfpartialdrucks im Reaktor und im Pufferautoklaven sind die gleichen wie vorstehend bereits ausgeführt.

Alle erfindungsgemäßen Verfahrensschritte können von 0,005 bis 1,5 Gew.-%, bezogen auf die Gesamtmenge aller polyamidbildenden Komponenten einer anorganischen und/oder organischen Phosphor- und/oder Zinn-und/oder Bleiverbindung als Katalysator durchgeführt werden.

Zu den Phosphorverbindungen, die verwendet werden können, gehören Phosphorsäure, phosphorige Säure, unterphosphorige Säure, Phenylphosphonsäure, Phenylphosphinsäure und deren Salze mit 1- bis 3-wertigen Kationen - z.B. dem Natrium-, Kalium-, Magnesium-, Calzium-, Zink- oder Aluminiumkation - Ester der Phosphor- oder phosphorigen Säure - z.B. Triphenylphosphat, Triphenylphosphit und Tris-(nonylphenyl)-phosphit.

Die Zinnverbindungen, die verwendet werden können, sind z.B. die folgenden: Zinn(II)-oxid, Zinn(II)-hydroxid, Zinn (II)-Salze ein- oder mehrwertiger Carbonsäuren, z.B. Zinn(II)-dibenzoat, Zinn(II)-di(2-ethylhexanoat), Zinn(II)-oxalat, ferner Dibutylzinnoxid, Butylzinnsäure($H_9C_4$-SnOOH) und Dibutyl-Zinn-dilaurat.

Unter den verwendbaren Bleiverbindungen finden sich z.B. Blei(II)-oxid, Blei(II)-hydroxid, Blei(II)-acetat, basisches Blei(II)-acetat und Blei(II)-carbonat.

Neben Phosphor-, Zinn- und Bleiverbindungen, die einen stabilisierenden Effekt auf die Vorkondensate und die betreffenden Polyamide ausüben können und/oder die Bildung von Amidbindungen katalysieren, können in allen Verfahrensschritten die üblichen Additive eingesetzt werden. Diese umfassen Antioxidantien, z.B. sterisch gehinderte Phenolderivate, aromatische Amine, Kombinationen aus Kupfersalzen und Alkalibromiden oder -iodiden, Lichtschutzmittel, z.B. Benzotriazolderivate, 2,2,6,6-Tetraalkylpiperidinderivate, Nickelchelatkomplete sowie die üblichen Verarbeitungshilfsmittel auf Basis von Fettsäureestern, Fettsäureamiden, F ettsäuresalzen mit 1- bis 3-wertigen Kationen, Fettalkohole und Wachse.

Schließlich können für den Fall teilkristalliner Polyamide oder Copolyamide in allen Verfahrensstufen die üblichen Nukleierungsmittel und Kristallisationsbeschleuniger in den üblichen Mengen eingesetzt werden: Dazu zählen feinteilige in den betreffenden Vorkondensaten und Polyamiden weitgehend uniösliche Mineralien, wie z.B. Glimmer, Kaolin, Talk, Montmorrilonit, Wollastonit und vergleichbare Materialien, aber auch organische Substanzen, wie z.B. Polyamid-2.2.

Die nach dem erfindungsgemäßen Verfahren aus Vorkondensaten zugänglichen amorphen oder teilkristallinen thermoplastisch verarbeitbaren teilaromatischen Polyamide oder Copolyamide können zur Herstellung von Formteilen mittels beliebiger geeigneter Verarbeitungstechniken verwendet werden. Geeignete Verarbeitungstechniken sind Spritzgießen, Mehrkomponente-Spritzgießen, Spritzgießschweißen, Extrusion, Coextrusion, Blasformen und Tiefziehen.

Zu diesem Zweck können den genannten Polyamiden oder Copolyamiden Verstärkungsmittel und Füllstoffe wie Glasfasern, Kohlefasern, mineralische Verstärkungs- und Füllstoffe sowie andere Modifizierungsmittel, beispielsweise flammhemmende Additive oder Antistatika, zugesetzt werden.

Die nachfolgenden Beispiele erläutern die Erfindung.

**Beispiele**

Es werden folgenden Abkürzungen verwendet:

| 66 | Hexamethylen - Adipamid - Einheiten |
|---|---|
| 6T | Hexamethylen - Terephthalamid - Einheiten |
| 6I | Hexamethylen - Isophthalamid - Einheiten |
| 106 | Decamethylen - Adipamid - Einheiten |
| 10T | Decamethylen - Terephthalamid - Einheiten |
| 12T | Dodecamethylen - Terephthalamid - Einheiten |

**Beispiel 1.1 - 1.3**

(CoPA 6T/6I (0,3/0,7 mol/mol; amorph))

■ Salzbildungsphase (Verfahrensstufe a)):
In einem 2,4 $\ell$-Doppelmantelreaktor (Stahl) werden 294,0 g (2,53 mol) Hexamethylendiamin als 50 %ige wäßrige Lösung vorgelegt. Nach Zugabe von 124,6 g (0,75 mol) Terephthalsäure, 290,8 g (1,75 mol) Isophthalsäure und 0,1 g $H_3PO_3$ wird der Reaktor verschlossen. Die Reaktionsmischung wird auf 120 °C erhitzt (Druck = ($10^5$ Pa (1 bar)). Es wird 30 Minuten bei 120 °C/$10^5$ Pa gerührt, wobei eine klare Lösung der in situ gebildeten Nylonsalze entsteht.

■ Überführung (Verfahrensstufe b)):
Entfällt im Falle des 2,4 $\ell$-Autoklaven.

■ Reaktionsphase (Verfahrensstufe c)):

Die Temperatur der Reaktionsmischung aus Verfahrensstufe a) wird schrittweise auf 245 °C gesteigert. Sobald der Druck im Reaktor einen Wert von 19 x 10$^5$ Pa (19 bar) erreicht hat, wird über ein regelbares Ventil dem Reaktionsgemisch soviel Wasserdampf entzogen, daß der Druck konstand bei 19 x 10$^5$ Pa (19 bar) gehalten wird. Dieser Druck wird für jeweils eine Stunde aufrechterhalten. Anschließend wird der Druck im Autoklaven durch kontrollierte Entspannung auf am Ende 6 x 10$^5$ Pa (6 bar)(Beispiel 1.1), 4 x 10$^5$ Pa (4 bar) (Beispiel 1.2) bzw. 3 x 10$^5$ Pa (3 bar) (Beispiel 1.3) reduziert. Da es sich bei Phase c) um einen dynamischen Vorgang handelt, entsprechen die in den folgenden Beispielen angegebenen Werte für T und p immer dem jeweiligen Endzustand dieser Phase.

■ Stationäre Phase (Verfahrensstufe d)):

Die am Ende der Reaktionsphase (Verfahrensstufe c)) eingestellten Bedingungen (245 °C/6 x 10$^5$ Pa (6 bar); 245 °C/4 x 10$^5$ Pa (4 bar); 245 °C/3 x 10$^5$ Pa (3 bar)) werden für 40 Minuten aufrechterhalten. Während dieser Zeitspanne werden zu Beginn und alle 10 Minuten Proben des betreffenden Vorkondensats zur Messung der relativen Lösungsviskosität (ηrel) entnommen. Die Ergebnisse sind in Tabelle II zusammengefaßt.

Tabelle II:

| Relative Lösungsviskosität der Vorkondensate während der stationären Phase (ηrel (0,5 % in m-Kresol)) | | | |
|---|---|---|---|
| Dauer der stationären Phase | Beispiel 1.1 - 6 x 10$^5$ Pa - | Beispiel 1.2 - 4 x 10$^5$ Pa - | Beispiel 1.3 - 3 x 10$^5$ Pa - |
| Beginn | 1,090 | 1,253 | 1,282 |
| 10 Minuten | 1,092 | 1,265 | 1,294 |
| 20 Minuten | 1,092 | 1,271 | 1,305 |
| 30 Minuten | 1,092 | 1,272 | 1,307 |
| 40 Minuten | 1,093 | 1,272 | 1,310 |

■ Austragsphase (Verfahrensstufe e)):

Während der jeweils 2 Minuten langen Austragsphase, die unter den Bedingungen von Verfahrensstufe d) erfolgt, werden jeweils zu Beginn und am Ende eine Probe des Betreffenden Vorkondensats entnommen und die relative Lösungsviskosität der Probe bestimmt.

Tabelle III:

| Relative Lösungsviskosität der Vorkondensate zu Beginn und am Ende der Austragsphase (ηrel (0,5 % in m-Kresol)) | | | |
|---|---|---|---|
| Austragsphase | Beispiel 1.1 | Beispiel 1.2 | Beispiel 1.3 |
| Beginn | 1,093 | 1,274 | 1,311 |
| Ende | 1,092 | 1,274 | 1,312 |

Die Ergebnisse aus Beispiel 1.1 bis 1.3 zeigen, wie über den Wasserdampfdruck während der stationären Phase (Verfahrensstufe d)) und der Austragsphase (Verfahrensstufe e)) die Viskosität des Polymer-Vorkondensats eingestellt werden kann. Nach Beendigung der stationären Phase hat die Reaktionsmischung einen annähernd stabilen Zustand erreicht.

In dieser Form können die betreffenden Vorkondensate als Schmelze direkt einer Endreaktionsvorrichtung zugeführt werden. Mit der Konstanz der Vorkondensat-Qualität ist gewährleistet, daß auch die Polykondensation in einer Endreaktionsvorrichtung zu Produkten gleichbleibender Qualität führt.

**Beispiel 2.1 - 2.3**

(CoPA 6T/61 (0,3/0,7 mol/mol; amorph))

Reaktionsvolumen =      130 ℓ
Einwaage:                      - 16,180 kg (139,23 mol) Hexamethylenamin
                                   - 16,165 kg ( 97,30 mol) Isophthalsäure
                                   - 6,928 kg ( 41,70 mol) Terephthalsäure

- 0,008 kg $H_3PO_3$
- 16,000 kg Wasser (29 Gew.-%)

■ Salzbildungsphase (Verfahrensschritt a)):

| Temperatur | 120 °C |
|---|---|
| Druck | $10^5$ Pa (1 bar) |
| Verweilzeit | 2 Stunden |

■ Überführungsphase (Verfahrensschritt b)):

| Temperatur | 120 °C |
|---|---|
| Druck | $10^5$ Pa (1 bar) |

■ Reaktionsphase (Verfahrensschritt c)):

| Temperatur | 245 °C (am Ende der Reaktionsphase) |
|---|---|
| Druck | 19 x $10^5$ Pa (19 bar) |
| Verweilzeit | 3 Stunden |
| Entspannung auf | 4 x $10^5$ Pa (4 bar) (am Ende der Reaktionsphase) |

■ Stationäre Phase (Verfahrensschritt d)):

| Temperatur | 245 °C |
|---|---|
| Druck | 4 x $10^5$ Pa (4 bar) |
| Verweilzeit | 20 Minuten |

■ Austragsphase (Verfahrensschritt e)):

| Temperatur | 245 °C |
|---|---|
| Druck | 4 x $10^5$ Pa (4 bar) |

Es wurden 3 identische Ansätze durchgeführt. Die Lösungsviskositäten in Tabelle IV zeigen die Reproduzierbarkeit einer gewünschten Vorkondensatviskosität, welcher über eine 20-minütige stationäre Phase und über die Austragsphase aufrechterhalten wird.

Tabelle IV:

| Reproduzierbarkeit von Zielviskositäten | | | |
|---|---|---|---|
| | Beispiel 2.1 | Beispiel 2.2 | Beispiel 2.3 |
| $\eta$rel (0,5 % in m-Kresol) | 1,265 | 1,252 | 1,253 |

**Beispiel 3.1, 3.2**

PA 12 T;
teilkristallin (AK = 6,06 mmol/g)
Schmelzpunkt: 301 °C

Reaktionsvolumen =     2,4 ℓ
Einwaage:     - 506,9 g (2,53 mol) Dodecamethylendiamin
    - 415,4 g (2,50 mol) Terephthalsäure
    - 0,1 g $H_3PO_3$
    - 500 g $H_2O$ (35 Gew.-%)

■ Salzbildungsphase (Verfahrensschritt a)):

| Temperatur | 180 °C |
|---|---|
| Druck | $8 \times 10^5$ Pa (8 bar) |
| Verweilzeit | 30 Minuten |

■ Überführungsphase (Verfahrensschritt b)):
Entfällt für 2,4 ℓ - Autoklaven

■ Reaktionsphase (Verfahrensschritt c)):

| Temperatur | 245 °C (am Ende der Reaktionsphase) |
|---|---|
| Druck | $27 \times 10^5$ Pa (27 bar) (am Ende der Reaktionsphase) |
| Verweilzeit | 1 Stunde |

**Beispiel 3.1:**

Eine kontrollierte schrittweise Entspannung auf einen Druck von $6 \times 10^5$ Pa (6 bar) (analog Beispiel 1.1) gelingt nicht, da die Reaktionsmischung bei etwa $20 \times 10^5$ Pa (20 bar) spontan kristallisiert und zum Stillstand des Rührers führt.

■ Stationäre Phase (Verfahrensschritt d)):
Beispiel 3.2:

| Temperatur | 245 °C |
|---|---|
| Druck | $27 \times 10^5$ Pa (27 bar) |
| Verweilzeit | 20 Minuten |

■ Austragsphase (Verfahrensschritt e)):
Beispiel 3.2:

| Temperatur | 245 °C |
|---|---|
| Druck | $27 \times 10^5$ Pa (27 bar) |
| Produkt | $\eta$rel = 1,071 (0,5 % in m-Kresol) |

**Beispiel 4.1, 4.2**

CoPA 10T/106 (0,9/0,1 mol/mol)
teilkristallin (AK = 6,67 mmol/g)
Schmelzpunkt: 299 °C

Reaktionsvolumen =      2,4 ℓ
Einwaage:      - 436,0 g (2,530 mol) Dodecamethylendiamin
     - 373,8 g (2,25 mol) Terephthalsäure
     - 36,5 g (0,25 mol) Adipinsäure
     - 0,2 g $NaH_2PO_2xH_2O$
     - 400 g $H_2O$ (32 Gew.-%)

■ Salzbildungsphase (Verfahrensschritt a)):

| Temperatur | 180 °C |
|---|---|
| Druck | $8 \times 10^5$ Pa (8 bar) |
| Verweilzeit | 30 Minuten |

■ Überführungsphase (Verfahrensschritt b)):

Entfällt

■   Reaktionsphase (Verfahrensschritt c)):

| Temperatur | 250 °C (am Ende der Reaktionsphase) |
|---|---|
| Druck | 32 x$10^5$ Pa (32 bar) (am Ende der Reaktionsphase) |
| Verweilzeit | 1 Stunde |

**Beispiel 4.1:**

Eine kontrollierte schrittweise Entspannung auf einen Druck von 6 x $10^5$ Pa (6 bar) (analog Beispiel 1.1) gelingt nicht, da die Reaktionsmischung bei etwa 14 x $10^5$ Pa (14 bar) spontan kristallisiert und zum Stillstand des Rührers führt.

■   Stationäre Phase (Verfahrensschritt d)):
    Beispiel 4.2:

| Temperatur | 250 °C |
|---|---|
| Druck | 32 x $10^5$ Pa (32 bar) |
| Verweilzeit | 20 Minuten |

■   Austragsphase (Verfahrensschritt e)):
    Beispiel 4.2:

| Temperatur | 250 °C |
|---|---|
| Druck | 32 x $10^5$ Pa (32 bar) |

■   Produkt:         $\eta$rel = 1,071 (0,5 % in m-Kresol)

Die Beispiele 3.1 und 3.2 bzw. 4.1 und 4.2 (teilkristalline PA bzw. CoPA) zeigen im Vergleich zu Beispiel 1 (amorphes CoPA), daß bei teilkristallinen PA oder CoPA am Ende der stationären Phase der Druck nicht reduziert werden kann, da dies zu unkontrollierbarer Kristallisation und damit zur Blockade des Rührers führt.

Die Austragsphase muß daher bei teilkristallinen PA oder CoPA mit einem Schmelzpunkt von mehr als 280°C zweckmäßigerweise unter den Bedingungen der stationären Phase erfolgen.

**Beispiele 5.1 - 5.3**

CoPA 6T/66 (0,6/0,4 mol/mol)
teilkristallin (AK = 8,40 mmol/g)
Schmelzpunkt: 316 °C

Reaktionsvolumen =     20 $\ell$
Einwaage:             - 2700 g (23,234 mol) Hexamethylendiamin
                      - 2310 g (13,904 mol) Terephthalsäure
                      - 1350 g (9,238 mol) Adipinsäure
                      - 20 g (0,164 mol) Benzoesäure
                      - 2 g $NaH_2PO_2xH_2O$
                      - 2000 g $H_2O$ (24 Gew.-%)

■   Salzbildungsphase (Verfahrensschritt a)):

| Temperatur | 180 °C |
|---|---|
| Druck | 6 x $10^5$ Pa (6 bar) |
| Verweilzeit | 2 Stunden |

■   Überführungsphase (Verfahrensschritt b)):

| Temperatur | 180 °C |
|---|---|
| Druck | $6 \times 10^5$ Pa (6 bar) |

■ Reaktionsphase (Verfahrensschritt c)):

| Temperatur: (am Ende der Reaktionsphase) | 241 °C (Beispiel 5.1) |
|---|---|
| | 243 °C (Beispiel 5.2) |
| | 247 °C (Beispiel 5.3) |
| Druck: (am Ende der Reaktionsphase) | $23 \times 10^5$ Pa (23 bar) (Beispiele 5.1 - 5.3) |
| Verweilzeit | 90 Minuten |

■ Stationäre Phase (Verfahrensschritt d)):

| Temperatur | 241 °C (Beispiel 5.1) |
|---|---|
| | 243 °C (Beispiel 5.2) |
| | 247 °C (Beispiel 5.3) |
| Druck | $23 \times 10^5$ Pa (23 bar) (Beispiele 5.1 - 5.3) |
| Verweilzeit | 30 Minuten |

■ Austragsphase (Verfahrensschritt e)):

| Temperatur | 241 °C (Beispiel 5.1) |
|---|---|
| | 243 °C (Beispiel 5.2) |
| | 247 °C (Beispiel 5.3) |
| Druck | $23 \times 10^5$ Pa (23 bar) (Beispiele 5.1 - 5.3) |

■ Produkt:

| | Beispiel 5.1 | Beispiel 5.2 | Beispiel 5.3 |
|---|---|---|---|
| ηrel (0,5 % in m-Kresol) | 1,125 | 1,136 | 1,160 |

Die Beispiele 5.1 bis 5.3 zeigen, wie über eine gezielte Temperatureinstellung in der Reaktions- und stationärer Phase eine gewünschte Viskosität des Polymervorkondensats eingestellt werden kann.

**Beispiele 6.1 - 6.3**

CoPA 6T/66 (0,6/0,4 mol/mol)
teilkristallin (AK = 8,40 mmol/g)
Schmelzpunkt: 316 °C

Reaktionsvolumen = 20 ℓ
Einwaage: identisch mit Beispiel 5

■ Salzbildungsphase (Verfahrensschritt a)):
identisch mit Beispiel 5

■ Überführungsphase (Verfahrensschritt b)):
identisch mit Beispiel 5

■ Reaktionsphase (Verfahrensschritt c)):

| Temperatur | 241 °C (am Ende der Reaktionsphase) |
| Druck: (am Ende der Reaktionsphase) | 23 x $10^5$ Pa (23 bar) (Beispiel 6.1) |
| | 22 x $10^5$ Pa (22 bar) (Beispiel 6.2) |
| | 20 x $10^5$ Pa (20 bar) (Beispiel 6.3) |
| Verweilzeit | 90 Minuten |

■ Stationäre Phase (Verfahrensschritt d)):

| Temperatur | 241°C |
| Druck | 23 x $10^5$ Pa (23 bar) (Beispiel 6.1) |
| | 22 x $10^5$ Pa 22 bar (Beispiel 6.2) |
| Druck: | 20 x $10^5$ Pa (20 bar) (Beispiel 6.3) |
| Verweilzeit: | 30 Minuten |

■ Austragsphase (Verfahrensschritt e)):

| Temperatur | 241 °C |
| Druck | 23 x $10^5$ Pa (23 bar) (Beispiel 6.1) |
| | 22 x $10^5$ Pa 22 bar (Beispiel 6.2) |
| | 20 x $10^5$ Pa 20 bar (Beispiel 6.3) |
| Verweilzeit | 30 Minuten |

■ Produkt:

| | Beispiel 6.1 | Beispiel 6.2 | Beispiel 6.3 |
|---|---|---|---|
| $\eta$rel (0,5 % in m-Kresol) | 1,128 | 1,145 | 1,157 |

Die Beispiele 6.1 bis 6.3 zeigen, wie über einen vorgegebenen Maximaldruck in der Reaktions- und stationären Phase eine gewünschte Viskosität des Polymervorkondensats eingestellt werden kann.

**Beispiele 7.1, 7.2**

CoPA 6T/66 (0,6/0,4 mol/mol)
teilkristallin (AK = 8,40 mmol/g)
Schmelzpunkt: 316 °C

Reaktionsvolumen =        20 ℓ
Einwaage:             identisch mit Beispiel 5

■ Salzbildungsphase:
      identisch mit Beispiel 5

■ Überführungsphase:
      identisch mit Beispiel 5

■ Reaktionsphase:

| Temperatur | 243 °C (am Ende der Reaktionsphase) |
| Druck | 23 x $10^5$ Pa (23 bar) (am Ende der Reaktionsphase) |

(fortgesetzt)

| Verweilzeit | 90 Minuten (Beispiel 7.1) |
|---|---|
| | 150 Minuten (Beispiel 7.2) |

■ Stationäre Phase:

| Temperatur | 243 °C |
|---|---|
| Druck | $23 \times 10^5$ Pa (23 bar) |
| Verweilzeit | 30 Minuten (Beispiel 7.1) |
| | 30 Minuten (Beispiel 7.2) |

■ Austragsphase:

| Temperatur | 243 °C |
|---|---|
| Druck | $23 \times 10^5$ Pa (23 bar) |

■ Produkt:

| | Beispiel 7.1 | Beispiel 7.2 |
|---|---|---|
| ηrel (0,5 % in m-Kresol) | 1,131 | 1,173 |

Die Beispiele 7.1 und 7.2 zeigen, wie über die Steuerung der Verweilzeit in der Reaktionsphase eine gewünschte Viskosität des Polymervorkondensats eingestellt werden kann.

**Beispiel 8**

CoPA 6T/66 (0,6/0,4 mol/mol)
teilkristallin (AK = 8,40 mmol/g)
Schmelzpunkt: 316 °C

Reaktionsvolumen = 20 ℓ
Einwaage: identisch mit Beispiel 5

■ Salzbildungsphase:
identisch mit Beispiel 5

■ Überführungsphase:
identisch mit Beispiel 5

■ Reaktionsphase:

| Temperatur | 255 °C (am Ende der Reaktionsphase) |
|---|---|
| Druck | $27 \times 10^5$ Pa (27 bar) (am Ende der Reaktionsphase) |
| Verweilzeit | 90 Minuten |
| Entspannung auf | $17 \times 10^5$ Pa 17 bar |

■ Stationäre Phase:

| Temperatur | 255 °C |
|---|---|
| Druck | $17 \times 10^5$ Pa (17 bar) |
| Verweilzeit | 30 Minuten |

■ Austragsphase:

| Temperatur | 255 °C |
|---|---|
| Druck | 17 x 10$^5$ Pa (17 bar) |

■ Produkt:

Produkt partiell im Reaktor kristallisiert. Austrag von etwa 50 % der erwarteten Produktmenge nicht möglich.
Restprodukt:  $\eta$rel = 1,211 (0,5 % in m-Kresol)

Beispiel 8 zeigt, daß bei Unterschreitung des geforderten $H_2O$-Partialdrucks gemäß Tabelle I (Fall II), die Reaktionsmischung im Autoklaven unkontrollierbar kristallisiert und nicht mehr komplett aus dem Reaktionsgefäß ausgebracht werden kann.

**Beispiele 9.1 - 9.3**

CoPA 6T/6I (0,7/0,3 mol/mol)
teilkristallin (AK = 8,12 mmol/g)
Schmelzpunkt: 320 °C

Reaktionsvolumen = 20 $\ell$
Einwaage: - 2500 g (21,513 mol) Hexamethylendiamin
- 2478 g (14,915 mol) Terephthalsäure
- 1062 g ( 6,392 mol) Isophthalsäure
- 15 (0,250 mol) Essigsäure
- 2 g $NaH_2PO_2xH_2O$
- 2000 g $H_2O$ (25 Gew.-%)

■ Salzbildungsphase:

| Temperatur | 180 °C |
|---|---|
| Druck | 6 x 10$^5$ Pa (6 bar) |
| Verweilzeit | 150 Minuten |

■ Überführungsphase:

| Temperatur | 180 °C |
|---|---|
| Druck | 6 x 10$^5$ Pa (6 bar) |

■ Reaktionsphase:

| Temperatur | 243 °C (am Ende der Reaktionsphase) |
|---|---|
| Druck | 23 x 10$^5$ Pa (23 bar) (am Ende der Reaktionsphase) |
| Verweilzeit | 120 Minuten |

■ Stationäre Phase:

| Temperatur | 243 °C |
|---|---|
| Druck | 23 x 10$^5$ Pa (23 bar) |
| Verweilzeit | 30 Minuten |

■ Austragsphase:

| Temperatur | 243 °C |
|---|---|
| Druck | 23 x 10$^5$ Pa (23 bar) |

■ Produkt:

Es wurden drei identische Ansätze durchgeführt. Die unten angegebenen Vorkondensat-Viskositäten zeigen die gute Reproduzierbarkeit einer gewünschten Vorkondensatqualität bei identischen Reaktionsbedingungen.

|  | Beispiel 9.1 | Beispiel 9.2 | Beispiel 9.3 |
|---|---|---|---|
| $\eta$rel (0,5 % in m-Kresol) | 1,092 | 1,085 | 1,088 |

Die relativen Lösungsviskositäten der Produkte werden nach DIN 53727 an 0,5 %igen Lösungen in m-Kresol bei 20 °C gemessen. Die Messung der Schmelztemperaturen (Maxima) erfolgt mit Hilfe eines DSC-Gerätes, Modell 990, der Firma DuPont. Ausgewertet wurde jeweils der zweite Heizlauf, aufgenommen mit einer Heizrate von 10°C/min.

Die in den Fällen oberhalb 280 °C schmelzender Polyamide oder Copolyamide angegebenen Amidkonzentrationen AK (in mmol/g) wurde jeweils für 100 %igen Umsatz der amidbildenden Komponenten nach der folgenden allgemeinen Formel berechnet:

$$AK = 1000 \ (\Sigma \ \frac{n_{A/C} \cdot m_{A/C}}{M_{A/C}} + \Sigma \ \frac{m_L}{M_L} + \Sigma \ \frac{m_{AS}}{M_{AS}}) \cdot$$

$$(\Sigma m_c + \Sigma m_A + \Sigma m_L + \Sigma m_{AS} - M_{H_2O} \cdot (\Sigma \ \frac{n_{A/C} \cdot m_{A/C}}{M_{A/C}} + \Sigma \ \frac{m_{AS}}{M_{A/S}}))^{-1}$$

Darin bedeuten:

$m_{A/C}$    die Masse $m_A$ der Amine bzw. $m_C$ der Carbonsäuren in g,
$M_{A/C}$    die Molmassen $M_A$ der Amine bzw. $M_C$ der Carbonsäuren in g/mol,
$n_{A/C}$    die Funktionalität $n_A$ der Amine bzw. $n_C$ der Carbonsäuren: 1 oder 2,
$m_L$    die Massen der Lactame in g,
$M_L$    die Molmassen der Lactame in g/mol,
$m_{AS}$    die Massen von Aminosäuren in g,
$M_{AS}$    die Molmassen von Aminosäuren in g/mol,
$M_{H_2O}$    die Molmasse von Wasser in g/mol.

Der Faktor 1000 dient zur Umrechnung von mol/g auf mmol/g. Die auf Lactame und Aminosäuren bezogenen Terme entfallen bei den betreffenden Beispielen.

Für den Term

$$\Sigma \ \frac{n_{A/C} \cdot m_{A/C}}{M_{A/C}} \ \text{wird} \ \Sigma \ \frac{n_A \cdot m_A}{M_A} \ \text{eingesetzt,}$$

wenn die Summe der Carboxylgruppen aus den Carbonsäuren größer ist als die Gesamtzahl der Aminogruppen aus den Aminen. Im umgekehrten Fall wird

$$\Sigma \ \frac{n_C \cdot m_C}{M_C} \ \text{berechnet.}$$

Tabelle V:

| Temperatur- und Druckbereich verschiedener Copolyamide | | | |
|---|---|---|---|
| CoPA (Molverhältnis) | Amidhäufigkeit AK [mmol/g] | Produkte-Temp.-Bereich [°C] | Druckbereich x $10^5$ [Pa] |
| 6T/66 (0,55 : 0,45) | 8,44 | 243 - 250 | 16 - 23 |
| 6T/61 (0,7 : 0,3) | 8,12 | 243 - 250 | 16 - 23 |
| 10T/106 (0,85 - 0,15) | 6,69 | 243 - 250 | 22 - 26 |

Tabelle V:  (fortgesetzt)

| Temperatur- und Druckbereich verschiedener Copolyamide | | | |
|---|---|---|---|
| CoPA (Molverhältnis) | Amidhäufigkeit AK [mmol/g] | Produkte-Temp.-Bereich [°C] | Druckbereich x $10^5$ [Pa] |
| 12T | 6,06 | 243 - 250 | 22 - 26 |
| 4T | 9,17 | | |

Tabelle VI: Amidgruppenhäufigkeit (2 Amidgruppen pro Wiederholungseinheit) verschiedener Polyamide in mmol/g Polymeres

| CoPA | Formel | MG | Amid-häufig-keit mmol/g |
|---|---|---|---|
| 6I und 6T | $\left[ N(H) - (CH_2)_6 - N(H) - C(O) - \text{(Benzolring)} - C(O) \right]_n$ | 246 | 8,12 |
| 66 | $\left[ N(H) - (CH_2)_6 - N(H) - C(O) - (CH_2)_4 - C(O) \right]_n$ | 226 | 8,85 |
| 10T | $\left[ N(H) - (CH_2)_{10} - N(H) - C(O) - \text{(Benzolring)} - C(O) \right]_n$ | 392 | 6,62 |
| 106 | $\left[ N(H) - (CH_2)_{10} - N(H) - C(O) - (CH_2)_4 - C(O) \right]_n$ | 282 | 7,09 |
| 12T | $\left[ N(H) - (CH_2)_{12} - N(H) - C(O) - \text{(Benzolring)} - C(O) \right]_n$ | 330 | 6,06 |
| 4T | $\left[ N(H) - (CH_2)_4 - N(H) - C(O) - \text{(Benzolring)} - C(O) \right]_n$ | 218 | 9,17 |
| 46 | $\left[ N(H) - (CH_2)_4 - N(H) - C(O) - (CH_2)_4 - C(O) \right]_n$ | 198 | 10,1 |

**Patentansprüche**

1. Verfahren zur Herstellung von Vorkondensaten teilkristalliner oder amorpher, thermoplastisch verarbeitbarer, teilaromatischer Polyamide bzw. Copolyamide, die auf Monomerbausteinen, ausgewählt aus der Gruppe A, B, C, D, E sowie gegebenenfalls den Komponenten F und G basieren:

A: 0 bis 100 Mol-% mindestens einer substituierten oder unsubstituierten aromatischen Dicarbonsäure mit 8 bis 18 Kohlenstoffatomen (bezogen auf die Gesamtmenge aller Dicarbonsäuren A + B),

B: 0 bis 100 Mol-% mindestens einer Dicarbonsäure mit 6 bis 36 Kohlenstoffatomen aus der Gruppe gerad- oder verzweigtkettiger aliphatischer und cycloaliphatischer Dicarbonsäuren (bezogen auf die Summe von A + B),

C: 0 bis 100 Mol-% mindestens eines gerad- oder verzweigtkettigen aliphatischen Diamins mit 4 bis 13 Kohlenstoffatomen (bezogen auf die Gesamtmenge aller Diamine C + D + E),

D: 0 bis 100 Mol-% mindestens eines cycloaliphatischen Diamins mit 6 bis 26 Kohlenstoffatomen (bezogen auf die Summe C + D + E),

E: 0 bis 100 Mol-% mindestens eines araliphatischen Diamins mit 8 bis 26 Kohlenstoffatomen (bezogen auf die Summe C + D + E),

sowie gegebenenfalls

F: 0 bis 80 Mol-%, bezogen auf die Gesamtmenge der Komponenten aus der Gruppe A, B, C, D, E, F, mindestens eines polyamid-bildenden Monomeren aus der Gruppe der Lactame, bzw. w-Aminosäuren mit 6 bis 12 Kohlenstoffatomen, und

G: 0 bis 6 Mol-%, bezogen auf die Gesamtmenge der Komponenten aus der Gruppe A, B, C, D, E, F, G, mindestens einer Verbindung aus der Gruppe der aliphatischen, cycloaliphatischen oder aromatischen Monoamine und der aliphatischen, cycloaliphatischen oder aromatischen Monocarbonsäuren,

mit der Maßgabe, daß jeweils mindestens eine der Komponenten A oder E vorhanden sein muß, und Dicarbonsäuren (A, B) und Diamine (C, D, E) in nahezu äquimolarem Verhältnis vorliegen, wobei gegebenenfalls

mindestens ein Katalysator und gegebenenfalls weitere verarbeitungs- oder verwendungsbedingte Additive hinzugefügt werden können,

wobei das Verfahren die folgenden Stufen umfaßt:

a) eine Salzbildungsstufe zur Bildung von Salzen aus Diamin(en) und Dicarbonsäure(n) in einer wäßrigen 5 bis 50 Gew.-%igen, die Komponenten enthaltenden Lösung, die in einem rühr- und inertisierbaren Autklaven unter gegebenenfalls partieller Vorreaktion zu niedermolekularen Oligoamiden bei Temperaturen von 120°C bis 220°C und unter Drücken von bis zu 23 x 10$^5$ Pa (23 bar) durchgeführt wird,

b) gegebenenfalls Überführung der Lösung aus Stufe a) in ein zweites Reaktionsgefäß bzw. einen Rührautoklaven unter den am Ende ihrer Herstellung herrschenden Bedingungen,

c) die Reaktionsphase, während der die Umsetzung zu den Vorkondensaten unter Aufheizen des Reaktorinhalts auf eine vorgegebene Temperatur und kontrolliertem Einstellen des Wasserdampfpartialdruckes auf den vorgegebenen Wert, der durch kontrolliertes Ablassen von Wasserdampf oder gegebenenfalls kontrollierte Einspeisung von Wasserdampf aus einem mit dem Autoklaven verbundenen Wasserdampferzeuger aufrechterhalten wird, vorangetrieben wird,

d) eine für mindestens 10 Minuten aufrechtzuerhaltende stationäre Phase, bei der die Temperatur des Reaktorinhalts und der Wasserdampfpartialdruck - letzterer unter Anwendung der unter c) aufgeführten Maßnahmen - kontrolliert jeweils auf die Werte eingestellt werden, welche für die Überführung der Vorkondensate in die nachfolgende Prozess-Stufe vorgesehen sind, mit der Maßgabe, daß im Falle von Vorkondensaten teilkristalliner Polyamide oder Copolyamide mit einem Schmelzpunkt von mehr als 280°C (Schmelzpunkt-Maximum, gemessen mittels Differential Scanning Colorimetry) die Temperatur des Reaktorinhalts während dieser Phase d) und der Phase c) 265°C nicht überschreiten darf und daß für die besagten teilkristallinen Polyamide oder Copolyamide während der Phasen d) und c) folgende Randbedingungen (Tabelle I) in bezug auf die Abhängigkeit des mindestens anzuwendenden Wasserdampfpartialdruckes $P_{H_2O}$ (min) von der Temperatur des Reaktorinhalts und der Amidgruppenkonzentration des Polymeren (in mmol/g, berechnet für ein auskondensiertes Polymer mit einer mittleren Molmasse von wenigstens 5000 g/mol) einzuhalten sind:

Tabelle I

|  | Amid-Kon.(AK) [mmol/g] | Temp.-Bereich [°C] | $P_{H_2O}$(min) x $10^5$ [Pa] |
|---|---|---|---|
| I | 10 > AK > 8 | 235 - 250 | 16 |
| II | 10 > AK > 8 | 250 - 260 | 19 |
| III | 8 > AK > 6 | 235 - 250 | 22 |
| IV | 8 > AK > 6 | 250 - 260 | 26 |
| V | 6 > AK | 235 - 250 | 30 |
| VI | 6 > AK | 250 - 260 | 32 |

e) eine Austragsphase, während der die Vorkondensate unter Konstanthalten der am Ende der Phase d) herrschenden Temperatur und Aufrechterhaltung mindestens des zu diesem Zeitpunkt herrschenden Wasserdampfpartialdrucks durch Einspeisen von Wasserdampf aus besagtem Wasserdampferzeuger in den Autoklaven und alle damit verbundenen Austragsleitungen/-aggregate entweder im schmelzeflüssigen Zustand über eine Puffereinrichtung direkt oder über eine Abscheidevorrichtung und Durchlaufen des festen Zustandes, mit nachfolgend wahlweisem Trocknen und/oder Zerkleinern und gegebenenfalls weiterer Verfahrensstufen einer Endreaktionsvorrichtung zugeführt werden können,
wobei bei Vorkondensaten amorpher oder unter 280°C schmelzender teilkristalliner teilaromatischer Polyamide oder Copolyamide in den Prozeßstufen c) bis e) die Vorkondensat-Temperatur zwischen 230°C und 320°C variiert werden kann und ein Wasserdampfpartialdruck von $1,5x10^5$ bis $20x10^5$ Pa (1,5 bis 20 bar) anwendbar ist.

2. Verfahren gemäß Anspruch 1, dadurch gekennzeichnet, daß in der Austragsphase e) vor dem Einbringen in eine Endreaktionsvorrichtung

- die Vorkondensate amorpher bzw. unterhalb 280°C schmelzender teilkristalliner Polyamide und Copolyamide in ein unter g!eichbleibender Temperatur und gleichbleibendem Druck stehendes, inertisiertes Puffergefäß übergeführt und von dort aus dosiert und weitergefördert werden, oder

- die Vorkondensate teilkristalliner Polyamide oder Copolyamide mit einem Schmelzpunkt von 280°C und höher unter Druck von mindestens 16 x $10^5$ Pa (16 bar) in eine inertisierte Abscheidevorrichtung eingesprüht und als feste Partikel gewonnen, wahlweise getrocknet und/oder zerkleinert werden.

3. Verfahren nach den Ansprüchen 1 und 2, dadurch gekennzeichnet, daß die Abscheidung der Vorkondensate, teilkristalliner Polyamide oder Copolyamide mit einem Schmelzpunkt von 280°C und höher in einen Zyklon oder in einen Sprühturm oder ein vergleichbares Aggregat erfolgt.

4. Verfahren nach einem der Ansprüche 1 bis 3, dadurch gekennzeichnet, daß 0,005 bis 1,5 Gew.-% Katalysator, bezogen auf die Gesamtmenge der Komponenten, ausgewählt aus der Gruppe organische oder anorganische Phosphor-, Zinn- und Blei-Verbindungen, eingesetzt werden kann.

5. Verfahren nach einem der vorhergehenden Ansprüche 1 bis 4, dadurch gekennzeichnet, daß als Reaktionsgefäß ein rühr- und inertisierbarer Autoklav eingesetzt wird.

6. Vorkondensateteilkristalliner oder amorpher, thermoplastisch verarbeitbarer, teilaromatischer Polyamide bzw. Copolyamide herstellbar nach dem Verfahren nach einem der Ansprüche 1 bis 5.

7. Verwendung von Vorkondensaten, herstellbar nach einem der Ansprüche 1 bis 6 zur Herstellung von hochmolekularen Polyamidformmassen oder Formteilen.

## Claims

1. Process for the preparation of precondensates of semicrystalline or amorphous, partly aromatic polyamides or copolyamides which can be processed as thermoplastics and are based on monomer building blocks selected from the group A, B, C, D, E and optionally the components F and G:

> A: 0 to 100 mol% of at least one substituted or unsubstituted aromatic dicarboxylic acid having 8 to 18 carbon atoms (based on the total amount of all dicarboxylic acids A + B),
> B: 0 to 100 mol% of at least one dicarboxylic acid having 6 to 36 carbon atoms from the group consisting of the straight-chain or branched aliphatic and cycloaliphatic dicarboxylic acids (based on the sum of A + B),
> C: 0 to 100 mol% of at least one straight-chain or branched aliphatic diamine having 4 to 13 carbon atoms (based on the total amount of all diamines C + D + E),
> D: 0 to 100 mol% of at least one cycloaliphatic diamine having 6 to 26 carbon atoms (based on the sum C + D + E),
> E: 0 to 100 mol% of at least one araliphatic diamine having 8 to 26 carbon atoms (based on the sum C + D + E),

and optionally

> F: 0 to 80 mol%, based on the total amount of the components from the group A, B, C, D, E and F, of at least one polyamide-forming monomer from the group consisting of the lactams or $\omega$-amino acids having 6 to 12 carbon atoms, and
> G: 0 to 6 mol%, based on the total amount of the components from the group A, B, C, D, E, F and G, of at least one compound from the group consisting of the aliphatic, cycloaliphatic or aromatic monoamines and of the aliphatic, cycloaliphatic or aromatic monocarboxylic acids,

with the proviso that in each case at least one of components A or E must be present, and dicarboxylic acids (A, B) and diamines (C, D, E) are present in a virtually equimolar ratio,
optionally
> at least one catalyst and
> optionally further processing- or application-related additives being added,
the process comprising the following stages:

> a) a salt formation stage for the formation of salts of diamine(s) and dicarboxylic acid(s) in an aqueous 5 to 50% strength by weight solution containing the components, which is carried out in a stirrable and blanketable autoclave, optionally with partial preliminary reaction, to give low molecular weight oligoamides, at temperatures of 120°C to 220°C and under pressures of up to $23 \times 10^5$ Pa (23 bar),
> b) optionally transfer of the solution from stage a) to a second reaction vessel or a stirred autoclave under the conditions prevailing at the end of its preparation,
> c) the reaction phase during which the conversion to the precondensates is carried out with heating of the reactor content to a predetermined temperature and controlled adjustment of the steam partial pressure to the predetermined value, which is maintained by controlled release of steam or optionally controlled supply of steam from a steam generator connected to the autoclave,
> d) a stationary phase which is to be maintained for at least 10 minutes and in which the temperature of the reactor content and the steam partial pressure - the latter with the use of the measures mentioned under c) - are each adjusted in a controlled manner to the values which are intended for the transfer of the precondensates to the subsequent process stage,
> with the proviso that, in the case of precondensates of semicrystalline polyamides or copolyamides having a melting point of more than 280°C (melting point maximum, measured by means of differential scanning colorimetry), the temperature of the reactor content must not exceed 265°C during this phase d) and the phase c), and that, for the said semicrystalline polyamides or copolyamides, the following boundary conditions (Table I) with respect to the dependency of the minimum steam partial pressure $P_{H2O}$ (min) to be used on the temperature of the reactor content and on the amido group concentration of the polymer (in mmol/g, calculated for a condensed polymer having an average molar mass of at least 5000 g/mol) are to be maintained during the phases d) and c):

Table I

|  | Amide concentration (AC) [mmol/g] | Temp. range [°C] | $P_{H2O}$ (min) $\times 10^5$ [Pa] |
|---|---|---|---|
| I | 10 > AC > 8 | 235 - 250 | 16 |
| II | 10 > AC > 8 | 250 - 260 | 19 |
| III | 8 > AC > 6 | 235 - 250 | 22 |
| IV | 8 > AC > 6 | 250 - 260 | 26 |
| V | 6 > AC | 235 - 250 | 30 |
| VI | 6 > AC | 250 - 260 | 32 |

e) a discharge phase, during which the precondensates can be fed to an apparatus for the final reaction, while keeping constant the temperature prevailing at the end of phase d) and maintaining at least the steam partial pressure prevailing at this time by supplying steam from said steam generator to the autoclave and all discharge pipes/units connected thereto, either directly in the molten state via a buffer means or via a separation apparatus and with conversion to the solid state, with optional subsequent drying and/or comminution and optionally further process stages,

it being possible to vary the precondensate temperature between 230°C and 320°C and to use a steam partial pressure of $1.5 \times 10^5$ to $20 \times 10^5$ Pa (1.5 to 20 bar) in the case of precondensates of amorphous, partially aromatic polyamides or copolyamides or of semicrystalline, partially aromatic polyamides or copolyamides melting below 280°C in the processes stages c) to e).

2. Process according to Claim 1, characterized in that, in the discharge phase e), before the introduction into an apparatus for the final reaction,

- the precondensates of amorphous polyamides and copolyamides or of semicrystalline polyamides and copolyamides melting below 280°C are transferred to a blanketed buffer vessel at constant temperature and constant pressure and are metered and further transported therefrom, or
- the precondensates of semicrystalline polyamides or copolyamides having a melting point of 280°C or higher are sprayed under a pressure of at least $16 \times 10^5$ Pa (16 bar) into a blanketed separation apparatus and recovered as solid particles, optionally dried and/or comminuted.

3. Process according to Claims 1 and 2, characterized in that the separation of the precondensates, semicrystalline polyamides or copolyamides having a melting point of 280°C or higher is carried out in a cyclone or in a spray tower or a comparable unit.

4. Process according to any of Claims 1 to 3, characterized in that 0.005 to 1.5% by weight of catalyst, based on the total amount of the components, selected from the group consisting of organic or inorganic phosphorus, tin and lead compounds, may be used.

5. Process according to any of the preceding Claims 1 to 4, characterized in that the reaction vessel used is a stirrable autoclave which can be rendered inert.

6. Precondensates of semicrystalline or amorphous, partially aromatic polyamides or copolyamides which can be processed as thermoplastics, preparable by the process according to any of Claims 1 to 5.

7. Use of precondensates, preparable according to any of Claims 1 to 6, for the preparation of high molecular weight polyamide moulding materials or shaped articles.

**Revendications**

1. Procédé de production de précondensats de polyamides ou de copolyamides semi-aromatiques partiellement cristallins ou amorphes, susceptibles de mise en oeuvre thermoplastique, qui sont à base de composants monomères choisis dans le groupe A, B, C, D, E ainsi que, le cas échéant, des composants F et G :

A : 0 à 100 moles % d'au moins un acide dicarboxylique aromatique substitué ou non substitué ayant 8 à 18 atomes de carbone (par rapport à la quantité totale de tous les acides dicarboxyliques A + B),

B : 0 à 100 moles % d'au moins un acide dicarboxylique ayant 6 à 36 atomes de carbone, du groupe des acides dicarboxyliques aliphatiques linéaires ou ramifiés et cycloaliphatiques (par rapport à la somme de A + B),

C : 0 à 100 moles % d'au moins une diamine aliphatique linéaire ou ramifiée ayant 4 à 13 atomes de carbone (par rapport à la quantité totale de toutes les diamines C + D + E),

D : 0 à 100 moles % d'au moins une diamine cycloaliphatique ayant 6 à 26 atomes de carbone (par rapport à la somme C + D + E),

E : 0 à 100 moles % d'au moins une diamine araliphatique ayant 8 à 26 atomes de carbone (par rapport à la somme C + D + E),

ainsi que, le cas échéant,

F : 0 à 80 moles %, par rapport à la quantité totale des composants du groupe A, B, C, D, E, F, d'au moins un monomère formant un polyamide du groupe des lactames ou des ω-aminoacides ayant 6 à 12 atomes de carbone, et

G : 0 à 6 moles %, par rapport à la quantité totale des composants du groupe A, B, C, D, E, F, G, d'au moins un composé du groupe des monoamines aliphatiques, cycloaliphatiques ou aromatiques et des acides monocarboxyliques aliphatiques, cycloaliphatiques ou aromatiques,

sous réserve que, dans chaque cas, au moins l'un des composants (A ou E) doive être présent, et que les acides dicarboxyliques (A, B) et les diamines (C, D, E) soient présents dans un rapport pratiquement équimolaire, et, le cas échéant

au moins un catalyseur et,

éventuellement, d'autres additifs conditionnés par la mise en oeuvre ou par l'utilisation peuvent être ajoutés, procédé qui comprend les étapes suivantes :

a) une étape de formation de sels d'une ou plusieurs diamines et d'un ou plusieurs acides dicarboxyliques dans une solution aqueuse contenant les composants à 5-50 % en poids, qui est conduite dans un autoclave équipé de moyens d'agitation et d'inertisation, avec le cas échéant préréaction partielle pour former des oligoamides de bas poids moléculaire à des températures de 120°C à 220°C et sous des pressions allant jusqu'à $23 \times 10^5$ Pa (23 bars),

b) le cas échéant, transfert de la solution de l'étape a) dans un second récipient de réaction ou dans un autoclave équipé d'un agitateur dans les conditions qui règnent à la fin de sa préparation,

c) la phase de réaction, pendant laquelle la transformation en les précondensats avec chauffage du contenu du réacteur à une température prédéterminée et réglage contrôlé de la pression partielle de vapeur d'eau à la valeur prédéterminée, qui est entretenue par décharge contrôlée de vapeur d'eau ou, le cas échéant, injection contrôlée de vapeur d'eau depuis un générateur de vapeur d'eau relié à l'autoclave, est tout d'abord conduite,

d) une phase stationnaire devant être entretenue pendant au moins 10 minutes, dans laquelle la température du contenu du réacteur et la pression partielle de la vapeur d'eau - cette dernière avec application des mesures indiquées en c) - sont réglées chacune aux valeurs qui sont prévues pour le transfert des précondensats dans l'étape suivante du procédé,

sous réserve que, dans le cas de précondensats de polyamides ou de copolyamides partiellement cristallins ayant un point de fusion supérieur à 280°C (maximum du point de fusion, mesuré par Diffential Scanning Calorimetry), la température du contenu du réacteur pendant cette phase d) et la phase c) ne puisse pas dépasser 265°C et que, pour les polyamides ou copolyamides partiellement cristallins en question, les conditions limites (Tableau I) suivantes soient respectées en ce qui concerne la dépendance de la pression partielle de vapeur d'eau $P_{H_2O}$ (min) devant être utilisée au minimum à l'égard de la température du contenu du réacteur et de la concentration en groupes amide du polymère (en mmoles/g, calculé pour un polymère entièrement condensé ayant une masse molaire moyenne d'au moins 5000 g/mole) :

Tableau I

|  | Concentration en amide (CA) [mmoles/g] | Plage de température [°C] | $P_{H_2O}$(min) $10^5$ [Pa] |
|---|---|---|---|
| I | 10 > CA > 8 | 235 - 250 | 16 |
| II | 10 > CA > 8 | 250 - 260 | 19 |
| III | 8 > CA > 6 | 235 - 250 | 22 |
| IV | 8 > CA > 6 | 250 - 260 | 26 |
| V | 6 > CA | 235 - 250 | 30 |
| VI | 6 > CA | 250 - 260 | 32 |

e) une phase de décharge, pendant laquelle les précondensats peuvent être envoyés à un dispositif de réaction finale avec maintien à une valeur constante de la température régnant à la fin de la phase d) et entretien d'au moins la pression partielle de vapeur d'eau régnant à cet instant par injection de vapeur d'eau depuis le générateur de vapeur d'eau en question dans l'autoclave et dans tous les conduits/groupes de décharge liés à l'autoclave, soit à l'état liquide fondu, en passant par un dispositif-tampon, directement ou par l'intermédiaire d'un dispositif de séparation et passage par l'état solide avec ensuite au choix séchage et/ou broyage et, le cas échéant, par d'autres étapes du procédé,

et dans le cas de précondensats amorphes ou de polyamides ou de copolyamides semi-aromatiques partiellement cristallins fondant au-dessous de 280°C dans les étapes c) à e) du procédé, on peut faire varier la température des préconden3,sats entre 230°C et 320°C et utiliser une pression partielle de vapeur d'eau de 1,5 x $10^5$ à 20 x $10^5$ Pa (1,5 à 20 bars).

2. Procédé suivant la revendication 1, caractérisé en ce que dans la phase de décharge e), avant l'introduction dans un dispositif de réaction finale,

- les précondensats de polyamides et copolyamides amorphes ou partiellement cristallins fondant en dessous de 280°C sont transférés dans un récipient-tampon inertisé maintenu à température constante et sous pression constante et sont dosés et transférés depuis ce récipient, ou bien
- les précondensats de polyamides ou copolyamides partiellement cristallins ayant un point de fusion de 280°C et plus sont injectés sous pression d'au moins 16 x $10^5$ Pa (16 bars) dans un dispositif de séparation inertisé et sont obtenus comme particules solides, qui sont au choix séchés et/ou broyés.

3. Procédé suivant les revendications 1 et 2, caractérisé en ce que la séparation des précondensats de polyamides ou copolyamides partiellement cristallins de point de fusion égal et supérieur à 280°C est effectuée dans un cyclone ou dans une tour de pulvérisation ou dans un appareil comparable.

4. Procédé suivant l'une des revendications 1 à 3, caractérisé en ce qu'on peut utiliser 0,005 à 1,5 % en poids de catalyseur, par rapport à la quantité totale des composants, choisi dans le groupe de composés organiques ou inorganiques de phosphore, d'étain et de plomb.

5. Procédé suivant l'une des revendications 1 à 4 précédentes, caractérisé en ce qu'on utilise comme récipient de réaction un autoclave équipé de moyens d'agitation et d'inertisation.

6. Précondensats de polyamides ou de copolyamides partiellement cristallins ou amorphes, semi-aromatiques, propres à une mise en oeuvre thermoplastique, pouvant être obtenus par le procédé suivant l'une des revendications 1 à 5.

7. Utilisation de précondensats pouvant être produits selon l'une des revendications 1 à 6 pour la production de compositions à mouler ou de pièces moulées en polyamides de haut poids moléculaire.